**Europäisches Patentamt**

**European Patent Office**

**Office européen des brevets**

(11) Veröffentlichungsnummer : **0 336 070 B1**

(12) **EUROPÄISCHE PATENTSCHRIFT**

(45) Veröffentlichungstag der Patentschrift :
24.04.91 Patentblatt 91/17

(51) Int. Cl.⁵ : **F16H 19/02, B60J 7/057**

(21) Anmeldenummer : **89101996.0**

(22) Anmeldetag : **06.02.89**

(54) Vorrichtung zum Antrieb eines drucksteif geführten Antriebskabels.

(30) Priorität : 24.03.88 DE 3809949

(43) Veröffentlichungstag der Anmeldung :
11.10.89 Patentblatt 89/41

(45) Bekanntmachung des Hinweises auf die
Patenterteilung :
24.04.91 Patentblatt 91/17

(84) Benannte Vertragsstaaten :
DE ES FR GB IT NL SE

(56) Entgegenhaltungen :
DE-A- 2 135 803
DE-A- 2 508 106
DE-B- 1 206 740

(73) Patentinhaber : Webasto AG Fahrzeugtechnik
Kraillingerstrasse 5
W-8035 Stockdorf (DE)

(72) Erfinder : Schleicher, Bernd
Prinzenstrasse 47
W-8000 München 19 (DE)

## Beschreibung

Die Erfindung bezieht sich entsprechend den Merkmalen im Oberbegriff von Anspruch 1 auf eine Vorrichtung zum Antrieb mindestens eines drucksteif geführten und axial bewegbaren, eine Wendel aufweisenden Antriebskabels, insbesondere zum Verstellen eines bewegbaren Teiles an einer Fahrzeugkarosserie, mit einem auf einer Antriebswelle sitzenden Antriebsritzel und einer Kabelführung zum Führen des Antriebskabels im Bereich des Antriebsritzels.

Vorrichtungen dieser Art sind in unterschiedlichen Ausführungen bekannt (vergleiche beispielshalber DE-C-12 06 740, DE-C-16 50 918, DE-B-21 35 803 und DE-A-35 45 869). Gemeinsam ist diesen bekannten Antriebsvorrichtungen, daß die mit dem Gewindekabel in Berührung kommenden Begrenzungskanten der Kabelführung mit der Längsachse des Antriebskabels einen Winkel von 90° bilden. Bei solchen an sich bewährten Antriebsvorrichtungen können daher beim Verstellen des Antriebskabels Geräusche auftreten.

Der im Anspruch 1 angegebenen Erfindung liegt die Aufgabe zugrunde, eine Antriebsvorrichtung der eingangs genannten Art zu schaffen, bei welcher die Geräuschbildung vermindert ist.

Diese Aufgabe wird, wie im Anspruch 1 angegeben, erfindungsgemäß dadurch gelöst, daß die mit dem Antriebskabel in Berührung kommenden Begrenzungskanten der Kabelführung mit der Längsachse des Antriebskabels einen von 90° abweichenden Winkel bilden und zugleich der von den Begrenzungskanten der Kabelführung und den ihnen zugewendeten Teilen der Wendelwindungen eingeschlossene spitze Anlaufwinkel größer als der spitze Steigungswinkel ist, den die Wendelwindungen mit einer zur Längsachse des Antriebskabels senkrecht stehenden Ebene einschließen.

Die Erfindung beruht auf der Erkenntnis, daß bei Antriebsvorrichtungen der vorliegend betrachteten Art die störenden Geräusche zu einem wesentlichen Teil durch das Anlaufen der Wendel des Antriebskabels an den Begrenzungskanten der Kabelführung verursacht werden, und daß dem durch die erfindungsgemäße Ausrichtung der Kabelführungsbegrenzungskanten überraschend wirkungsvoll begegnet werden kann. Insbesondere führt die erfindungsgemäße Lösung zu einem gleichmäßigen und stoßfreien Einlaufen der Wendel in die Kabelführung, was eine erhebliche Geräuschminderung zur Folge hat.

Die Begrenzungskanten der Kabelführung sind vorzugsweise entgegen der Wendelsteigung mit Bezug auf die Längsachse des Antriebskabels um einen Winkel geneigt, der kleiner als 90° ist. Vorzugsweise ist ferner der von den Begrenzungskanten der Kabelführung und den ihnen zugewendeten Teilen der Wendelwindungen eingeschlossene Winkel mindestens doppelt so groß wie der Steigungswinkel der Wendel.

Die Kabelführung kann insbesondere in an sich bekannter Weise einen U-förmigen Querschnitt (DE-B-21 35 803 und DE-A-35 45 869), einen umgekehrt U-förmigen Querschnitt (DE-C-12 06 740) oder einen rohrförmigen Querschnitt (DE-C-16 50 918) haben.

Die Antriebsvorrichtung ist vor allem für den Antrieb von verstellbaren Deckeln von Fahrzeugdächern oder von verstellbaren Fahrzeugfenstern bestimmt.

Zwei Ausführungsbeispiele der Erfindung sind im folgenden anhand der Zeichnung näher erläutert. Es zeigt :

Fig. 1 den Schnitt durch eine Antriebsvorrichtung entlang der Linie I-I der Fig. 2,

Fig. 2 eine Draufsicht auf die Antriebsvorrichtung nach Fig. 1,

Fig. 3 den Schnitt entlang der Linie III-III der Fig. 2,

Fig. 4 eine Draufsicht auf die Kabelführung der Antriebsvorrichtung gemäß den Fign. 1 bis 3 sowie das eine Antriebskabel,

Fig. 5 eine Teildraufsicht auf ein Antriebskabel und eine Kabelführung entsprechend einer abgewandelten Ausführungsform sowie

Fig. 6 eine perspektivische Teilansicht der Kabelführung nach Fig. 5.

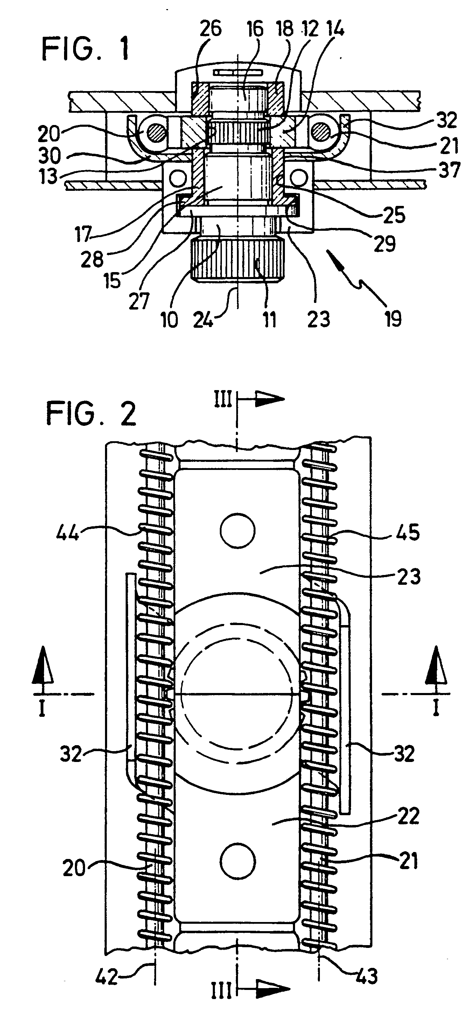

Die in den Fign. 1 bis 4 veranschaulichte Antriebsvorrichtung weist eine Antriebswelle 10 mit einem kerbverzahnten Kopf 11 auf. Auf den Kopf 11 kann eine (nicht dargestellte) Handkurbel aufgesteckt werden. Der Kopf 11 kann auch für einen Kämmeingriff mit einem Ausgangszahnrad eines motorischen Antriebes ausgebildet sein. Eine Außenkerbverzahnung 12 der Antriebswelle 10 steht mit einer Innenkerbverzahnung 13 eines auf die Antriebswelle 10 aufgesteckten Antriebsritzels 14 in Eingriff, um für eine drehfeste Verbindung zwischen Antriebswelle 10 und Antriebsritzel 14 zu sorgen.

Zylindrische Teile 15 und 16 der Antriebswelle 10 sind über eine Lagerbuchse 17 bzw. eine Lagerbuchse 18 in einem insgesamt mit 19 bezeichneten Lagergehäuse drehbar gelagert. Mittels des Antriebsritzels 14 wird Antriebskraft auf zwei drucksteif geführte und axial bewegbare Antriebskabel 20 und 21 übertragen, die mit radial einander gegenüberliegenden Seiten des Antriebsritzels 14 in Kämmeingriff gehalten sind. Das Lagergehäuse 19 ist quer zu den Längsachsen der Antriebskabel 20 und 21 geteilt und bildet zwei formgleiche Lagerschalenhälften 22 und 23. Die Teilungsebene des Lagergehäuses 19 beinhaltet die Längsachse 24 der Antriebswelle 10. Die beiden Lagerschalenhälften 22 und 23 bilden ein Hauptlager 25 zur Aufnahme der ersten Lagerbuchse 17 sowie ein Gegenlager 26 zur Aufnahme der zweiten Lagerbuchse 18. An der Antriebswelle 10 ist ein radial vorspringender Bund 27 angeformt. Der Bund 27 greift zusammen mit einem radial vorspringenden Bund 28 der Lagerbuchse 17 in entsprechende Ausnehmungen 29 der Lagerschalenhälften 22 und 23 ein.

Auf die Antriebswelle 10 ist eine Kabelführung 30 mit Spiel aufgesetzt. Die Kabelführung 30 besteht aus einem in der Blickrichtung der Schnittlinie I-I der Fig. 2 U-förmig gebogenen Metallblech. An einen zur Längsachse der Antriebswelle 10 senkrecht verlaufenden Basisteil 31 der Kabelführung 30 schließen aussen einander diametral gegenüberliegende, zur Längsachse 24 im wesentlichen parallel verlaufende Führungsstege 32 an, die in den Basisteil 31 mit einem dem Außendurchmesser der Antriebskabel 20 und 21 angepaßten Krümmungsradius übergehen. Die Führungsstege 32 haben von dem Antriebsritzel 14 einen solchen Querabstand, daß sie die Antriebskabel 20 und 21 in sicherem Eingriff mit der Außenverzahnung des Antriebsritzels 14 halten (Fig. 1). Quer zu den Führungsstegen 32 verlaufendekreisringförmige Abschnitte 33 des Basisteils 31 greifen in jeweils eine zusätzliche Ausnehmung 34 der Lagerschalenhälften 22 und 23 ein. Am Übergang der kreisringförmigen Abschnitte 33 des Basisteils 31 zu den Führungsstegen 32 entstehen parallel zu den Führungsstegen 32 verlaufende Anlageflächen 36, mit denen sich die Kabelführung 30 an einander diametral gegenüberliegenden Seitenflächen 37 der Lagerschalenhälften 22 und 23 abstützt. Auf diese Weise wird eine sichere Formschluß-Verbindung zwischen der Kabelführung 30 und den beiden Lagerschalenhälften 22 und 23 erhalten, welche die Kabelführung 30 sowohl in Axialrichtung fixiert als auch an einer Drehung gegenüber dem Lagergehäuse 19 hindert.

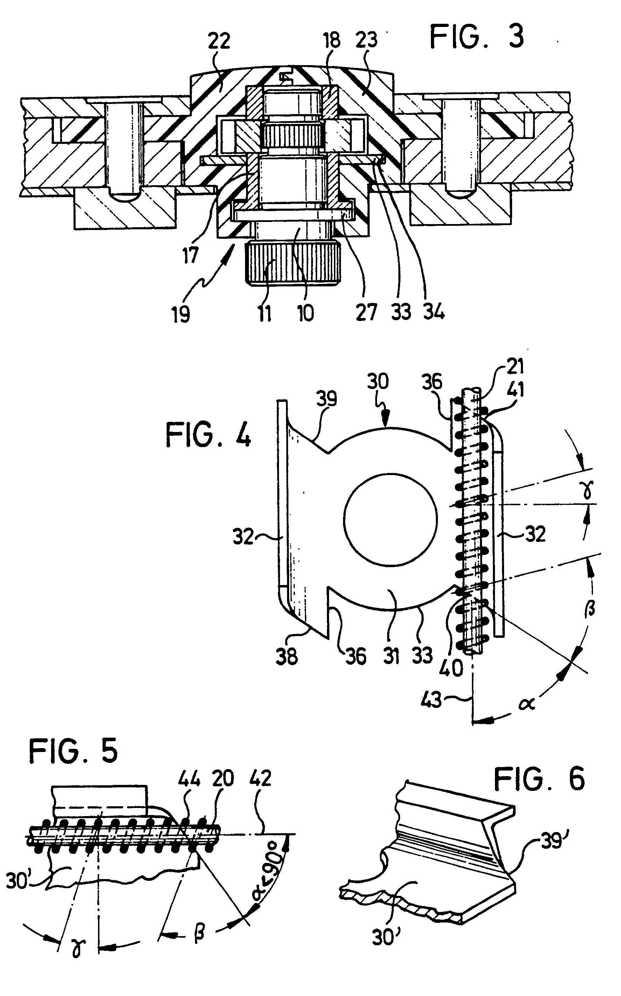

Wie insbesondere aus Fig. 4 hervorgeht, weist die Kabelführung 30 mit dem Antriebskabel 20 in Berührung kommende Begrenzungskanten 38 und 39 sowie mit dem Antriebskabel 21 in Berührung kommende Begrenzungskanten 40 und 41 auf, die mit Bezug auf die Längsachsen 42 und 43 der Antriebskabel 20 bzw. 21 geneigt sind. Bei der veranschaulichten bevorzugten Ausführungsform verläuft die Neigung der Begrenzungskanten 38 bis 41 entgegen der Steigung der Wendeln 44 und 45 der Antriebskabel 20 bzw. 21 bezüglich der diesen Begrenzungskanten zugewendeten Teile der Wendelwindungen. Dabei bilden die Begrenzungskanten 38 bis 41 mit den Längsachsen 42 und 43 der Antriebskabel 20 bzw. 21 einen Winkel α, der kleiner als 90° ist. Unabhängig davon, ob die Begrenzungskanten der Kabelführung, wie veranschaulicht, entgegen der Wendelsteigung oder aber in gleicher Richtung wie die Wendelsteigung geneigt sind, weicht der Winkel α jedenfalls von 90° ab, under ist so gewählt, daß der von den Begrenzungskanten 38 bis 41 der Kabelführung 30 und den ihnen zugewendeten Teilen der Wendelwindungen eingeschlossene spitze Anlaufwinkel β größer ist als der spitze Steigungswinkel γ, den die Wendelwindungen mit einer zu den Längsachsen der Antriebskabel senkrecht stehenden Ebene einschließen. Vorzugsweise ist der Anlaufwinkel β mindestens doppelt so groß wie der Steigungswinkel γ der Wendeln 44 bzw. 45.

Es zeigte sich, daß die erläuterte einfache Maßnahme der Schrägstellung der Begrenzungskanten 38 bis 41 zu einer wesentlichen Geräuschminderung beim Arbeiten der Antriebsvorrichtung führt. Dabei gilt allgemein, daß der Geräuschminderungseffekt mit größer werdendem Anlaufwinkel steigt, d.h. bei der Ausführungsform nach Fig. 4 mit kleiner werden dem Winkel α.

Bei der abgewandelten Ausführungsform gemäß den Fign. 5 und 6 ist die Wendel 44 des Antriebskabels 20 in entgegengesetzter Richtung wie im Falle der Ausführungsform nach den Fign. 1 bis 4 gewickelt. Dementsprechend ist auch die Begrenzungskante 39' der Kabelführung 30' in zu den Fign. 2 und 4 entgegengesetzter Richtung geneigt.

## Ansprüche

1. Vorrichtung zum Antrieb mindestens eines drucksteif geführten und axial bewegbaren, eine Wendel (44, 45) aufweisenden Antriebskabels (20, 21), insbesondere zum Verstellen eines bewegbaren Teiles an einer Fahrzeugkarosserie, mit einem auf einer Antriebswelle (10) sitzenden Antriebsritzel (14) und einer Kabelführung (30 ; 30') zum Führen des Antriebskabels im Bereich des Antriebsritzels, **dadurch gekennzeichnet,** daß die mit dem Antriebskabel (20, 21) in Berührung kommenden Begrenzungskanten (38, 39, 40, 41 ; 39') der Kabelführung (30, 30') mit der Längsachse (42, 43) des Antriebskabels einen von 90° abweichenden Winkel (α) bilden, und zugleich der von den Begrenzungskanten der Kabelführung und den ihnen zugewendeten Teilen der Wendelwindungen eingeschlossene spitze Anlaufwinkel (β) größer ist als der spitze Steigungswinkel (γ), den die Wendelwindungen mit einer zur Längsachse des Antriebskabels senkrecht stehenden Ebene einschließen.

2. Vorrichtung nach Anspruch 1, dadurch gekennzeichnet, daß die Begrenzungskanten (38, 39, 40, 41 ; 39') der Kabelführung (30, 30') entgegen der Wendelsteigung mit Bezug auf die Längsachse (42, 43) des Antriebskabels um den Winkel (α) geneigt sind, der kleiner als 90° ist.

3. Vorrichtung nach Anspruch 1 oder 2, dadurch gekennzeichnet, daß der von den Begrenzungskanten (38, 39, 40, 41 ; 39') der Kabelführung (30, 30') und den ihnen zugewendeten Teilen der Wendelwindungen eingeschlossene spitze Anlaufwinkel (β) mindestens doppelt so groß wie der Steigungswinkel (γ) der Wendel (44, 45) ist.

## Claims

1. Device for actuating at least one incompressibly guided, axially movable drive cable (20, 21) having a helical thread (44, 45) and in particular for adjusting a movable part on a motor vehicle body, having a drive pinion (14) seated on a drive shaft (10) and a cable guide (30, 30') for guiding the drive cable in the vicinity of the drive pinion, characterized in that the boundary edges (38, 39, 40, 41, ; 39') of the cable guide (30, 30') coming into contact with the drive cable (20, 21) form an angle ($\alpha$) differing from 90° with the longitudinal axis (42, 43) of the drive cable and at the same time the acute approach angle ($\beta$) formed by the boundary edges of the cable guide and the parts of the helical turns facing them is larger than the acute helix angle ($\gamma$) formed by the helical turns with a plane at right angles to the longitudinal axis of the drive cable.

2. Device according to claim 1, characterized in that the boundary edges (38, 39, 40, 41 ; 39') of the cable guide (30, 30') are inclined by an angle ($\alpha$), which is smaller than 90°, counter to the helical pitch with respect to the longitudinal axis (42, 43) of the drive cable.

3. Device according to claims 1 or 2, characterized in that the acute approach angle ($\beta$) formed by the boundary edges (38, 39, 40, 41 ; 39') of the cable guide (30, 30') and the parts of the helical turns facing the same is at least twice as large as the helix angle ($\gamma$) of the helical threads (44, 45).

## Revendications

1. Dispositif d'entraînement d'au moins un câble d'entraînement présentant une hélice, guidé en pression et mobile axialement, notamment pour régler une pièce mobile sur une carrosserie de véhicule avec un pignon d'entraînement (14) logé sur un arbre d'entraînement et un guidage de câble (30, 30') pour guider le câble d'entraînement dans le domaine du pignon d'entraînement, caractérisé en ce que les bords de limitation (38, 39, 40, 41 ; 39') du guidage de câble (30, 30') venant en contact avec le câble d'entraînement (20, 21) font un angle ($\alpha$) différent de 90° avec l'axe longitudinal du câble (42, 43) d'entraînement, et en même temps, l'angle aigu ($\beta$) d'attaque formé par les bords de limitation du guidage de câble et les parties des spires d'hélice tournées vers eux est supérieur à l'angle aigu ($\gamma$) du pas de l'hélice que font les spires d'hélice avec un plan perpendiculaire à l'axe longitudinal d'entraînement.

2. Dispositif selon la revendication 1, caractérisé en ce que les bords de limitation (38, 39, 40, 41 ; 39') du guidage de câble (30 ; 30') sont inclinés à l'opposé du pas de l'hélice, par rapport à l'axe longitudinal (42, 43) du câble d'entraînement, de l'angle ($\alpha$) qui est inférieur à 90°.

3. Dispositif selon la revendication 1 ou 2, caractérisé en ce que l'angle aigu d'attaque ($\beta$) formé par les bords de limitation (38, 39, 40, 41 ; 39') du guidage de câble (30 ; 30') et par les pièces de spire d'hélice tournées vers eux soit au moins le double de l'angle de pas ($\gamma$) de l'hélice (44, 45).

FIG. 1

26 16 18 12 14

20
30
13

17
28
15
27
10 24 11 23

32
21
37

25
29
19

FIG. 2

III

44
45
23

32
32

20
22
21

42
III
43

FIG. 3

FIG. 4

FIG. 5

FIG. 6